# EUROPEAN PATENT APPLICATION

(11) **EP 1 708 415 A1**
(43) Date of publication of application: **04.10.2006**
(21) Application number: 05252075.6
(22) Date of filing: 01.04.2005
(51) Int. Cl.: H04L 12/28, H04L 29/06

(54) **Method and apparatus for automatically setting the security parameters in WLANs**

(71) Applicant: Zyxel Communications Corporation, Hsin-Chu, Taiwan (TW)
(72) Inventor: Peng, Yang-Hung, Hsin-Chu (TW); Liu, Hsueh-Ying, Hsin-Chu (TW); Lo, Wei-Zhe, Hsin-Chu (TW); Chang, Yun-Chang, Hsin-Chu (TW)
(74) Representative: Dearing-Lambert, Peter Richard

(57) **Abstract**

Disclosed is a method for auto setting security mechanism of WLAN. The method comprises a normal step, which enables a station (503) and an access point (501) to execute the communicating negotiation between them, and a security setting step, which is used to execute the security mechanism setting automatically. Moreover, the security setting step comprises a defining step, which defines a plurality of parameters of the access point (501) and a connecting step, which enables the station (503) to connect to the access point (501), the access point (501) to broadcast the UDP packages periodically, and sets the WLAN security settings. After the security setting step, the stations (503) and access points (501) execute the normal step again. Another aspect of the present invention is an apparatus for auto setting security mechanism of WLAN.

## Description

### BACKGROUND OF THE INVENTION

### 1. Field of the Invention

The present invention relates to a method for auto setting security mechanism of Wireless LAN (WLAN) and the apparatus of the same, and more particularly to a method for auto setting security mechanism of WLAN when utilizing the WLAN access point (AP) connection at the first time or increasing new stations (ST) and the apparatus of the same.

### 2. Description of the Prior Art

Due to the popularization of computers and network, it becomes one part of human life to use computers to transmit data through network. Especially, because the WLAN technology has greatly increased, a modem computer is always provided with a WLAN card to make wireless connection with an AP, and then computer is possible to connect to network or other computers in LAN through the AP. By using such kind of WLAN, it is not difficult in assembling hardware of which and the disorderly lines from the use of network lines and hubs can be avoided by using this kind of WLAN. Thus, it becomes a tendency to use network by utilizing WLAN.

However, the ST computers, which use the same WLAN cards, may enter private LAN without physical connection or connect to network thorough other ones' WLAN AP. Consequently, there will be serious issues of the WLAN security.

Accordingly, before the first time of using network, the users must set the security settings between AP and ST to prevent other users from entering private LAN. Even so, security setting in these days is complicated for users to set appropriate settings, because if there are any problems in setting, even a small error, will cause the non-operation of WLAN.

For example, when a user wants to assemble a ST, he must execute the following steps:

1. Inputting the SSID (Service Set Identifier) of the AP to be connected. The user can use Site Survey Tool of WLAN Card to search for desired AP, but a plurality of APs with the same Factory Default SSID will be found. Next, the user must test these APs one by one or obtain the MAC address of the AP to be connected by other methods.

2. Choosing a security mode of the AP. In Windows XP, the security mode can be selected from Open System, Shared Key, WPA and WPA-PSK.

3. Choosing an encryption engine. This engine can be WEP (Wired Equivalent Privacy) or TKIP (Temporal Key Integrity Protocol).

4. Providing a Key.

5. Checking the Key.

The above steps are not only complicated but also difficult for users other than persons skilled in computer yield to accomplish the steps quickly and accurately. Moreover, if the APs in Internet are changed or a new AP is added, the new AP and each one of the STs are both needed to reset security mechanism. Hence, the difficulties in setting will increase and a large amount of human resource and time will be wasted.

Besides, security setting is always hidden for users to connect APs and new STs. In this case, if the user forgets or doesn't know how to change original settings, the defects of security will be produced.

In order to solve the defects and disadvantages of the security mechanism setting between APs and STs, the inventors of the present invention provide a method and an apparatus for the security mechanism setting between APs and STs by keeping their minds on researching and combining the applications of theory. The method and the apparatus may set the security mechanism automatically to avoid users from getting trouble in setting network security, and is a well-designed invention, which can improve above defects efficiently.

### SUMMARY OF THE INVENTION

According to the present invention, a method for auto setting security mechanism of WLAN and the apparatus of the same are disclosed, which are provided with a hardware security setting button on the AP and T or a software security setting button in the software. The users only need to touch these securities setting buttons to complete the security mechanism settings between the AP and ST. When the AP and ST connect to each other, the AP and ST can set the security mechanism automatically without the user's setting, until the setting is completed.

Thus, a method for auto setting WLAN security mechanism is disclosed, which comprises: a normal step, which executes communicating negotiation between an AP and a ST; and a security setting step, which includes a defining step and a connecting step. In the defining step, the AP defines a plurality of parameters, and the connecting step enables the ST to connect to the AP, which is enabled to broadcast the UDP packages periodically. Furthermore, the connecting step sets up the WLAN security settings.

The method can further comprise an activating step, which is used to stop the normal step and activate the security setting step. The activating step may be at least one selected from a group of AP hardware activation, AP software activation, AC intelligent activation, ST manual activation and ST auto activation.

The above-mentioned parameters may comprise: a SSID parameter, a recognition parameter, and a WEP parameter. The SSID parameter may comprise ORI_SSID and _ZERO_CFG. Also, a value of the recognition parameter is Shared Secret. The size of the WEP parameter is 64 bits. Moreover, the final 5 bytes of said WEP parameter are AP MAC address and used as Key.

Moreover, in the connecting step, the data is DES encrypted by using IV with value 0 and Key of 64 bits, and the value of the Key of 64 bits is generated by hashing an USER_KEY parameter and an AP_MAC.

Also, the above-mentioned UDP packages may comprise a MAC head of value 255.255.255.255 and an UDP head of ZFG_PORT with a predetermined value, or comprise inversion, Key, Key index and continuing period.

Another aspect of the present invention is an apparatus for auto setting WLAN security mechanism. The apparatus comprises an AP having a defining module and a ST having a connecting module.

Wherein the AP and ST execute a normal step to establish communicating negotiation between the AP and ST. Then the AP and ST execute a security setting step, in which the defining module defines a plurality of parameters; and next the connecting module connects to the AP according to the parameters and sets up the WLAN security settings. After that, the AP broadcasts the UDP packages periodically.

Moreover, the apparatus may further comprise an activating apparatus, which is used to stop the normal step and activate the security setting step. The activating apparatus can be selected from a group of AP hardware activating apparatus, AP software activating apparatus, AP intelligent activating apparatus ST manual activating apparatus and ST auto activating apparatus.

Wherein the parameters comprise: a SSID parameter, a recognition parameter, and a WEP parameter. The SSID parameter comprises ORI_SSID and _ZERO_CFG and a value of the recognition parameter is Shared Secret. Also, a size of said WEP parameter is 64 bits, the final 5 bytes of the WEP parameter are AP MAC address, and the final 5 bytes of WEP are used as Key.

In the connecting step, data is DES encrypted by using IV with value 0 and Key of 64 bits, and the value of the Key of 64 bits is generated by hashing a USER_KEY parameter and an AP_MAC. Moreover, the UDP packages comprise a MAC head of value 255.255.255.255 and an UDP head of ZFG_PORT with a predetermined value. Also, data of said UDP packages comprises inversion, Key, Key index and continuing period.

### BRIEF DESCRIPTION OF THE DRAWINGS

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:

**Fig 1** illustrates a connecting step of a method for auto setting security mechanism of WLAN according to a preferred embodiment of the present invention;

Fig 2 is a table illustrates the parameters defined by the method for auto setting security mechanism of WLAN according to a preferred embodiment of the present invention;

**Fig 3A** is a table illustrates the encryption parameters from the connecting step of the method for auto setting security mechanism of WLAN according to a preferred embodiment of the present invention;

**Fig 3B** is a table illustrates the UDP package header from the connecting step of the method for auto setting security mechanism of WLAN according to a preferred embodiment of the present invention;

**Fig 4** is a table illustrates the data structure of the UDP package header from the connecting step of the method for auto setting security mechanism of WLAN according to a preferred embodiment of the present invention; and

**Fig 5** illustrates an apparatus according to a preferred embodiment of the present invention.

### DETAILED DESCRIPTION OF THE INVENTION

In order to make the examiners understand the characteristics necessary to achieve the present invention with more detail, please refer to the detail description and figures of the present invention, by which through and concrete information of the purpose and characteristics of the present invention will be obtained. It should be noted that the figures are just for reference and description and limit no scope of the present invention.

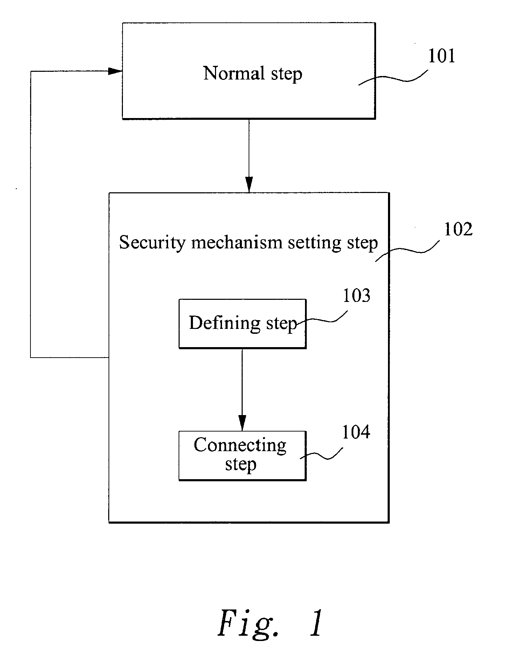

Please refer to **Fig. 1,** the steps of operations between an AP and a ST can be divided into normal **step 101** and security mechanism set **step 102,** wherein security mechanism set **step 102** further comprises defining **step 103** and connecting **step 104.**

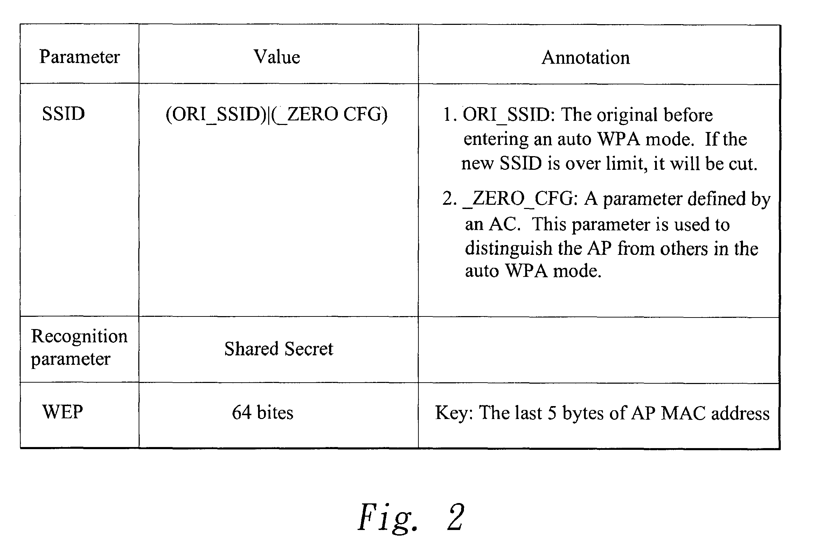

In normal **step 101,** negotiation is executed between the AP and the ST to generate the connection between. However, the steps of negotiation are well known by persons skilled in the art, such that it will not be described again. By the activation of the AP or ST, the AP and ST will stop normal **step 101** and activate security mechanism setting **step 102.** Then, entering defining **step 103,** in defining **step 103** the APs will set the parameters for the ST to search, and the ST will filter the APs and list selectable APs. Also, the parameters include a SSID parameter, a recognition parameter and a WEP parameter. Moreover, the value of the parameters is shown in **Fig. 2,** in which the SSID parameter comprises ORI_SSID and _ZERO_CFG, the recognition parameter is shared secret, the WEP's size is 64 bits, and the Key of WEP parameter is the last 5 bytes of APs' MAC address. Wherein the ORI_SSID means an initial SSID before transferring to an auto WPA mode, and if the new SSID is over limit, then the new SSID will be cut. Furthermore, _ZERO_CFG is a predetermined series for the AP and is used to distinguish this AC.

In turn, entering the connecting **step 104,** in this step the ST receives the data generated from the defining **step 103** and is connected to the AP to receive WLAN settings. Further, in connecting **step 104** the ST broadcasts UDP (User Datagram Protocol) packages periodically. Completing the connecting step also means completing the security mechanism setting **step 102.** After security mechanism setting **step 102,** in will return to normal **step 101** to continually executing the normal connecting process between the AP and the ST.

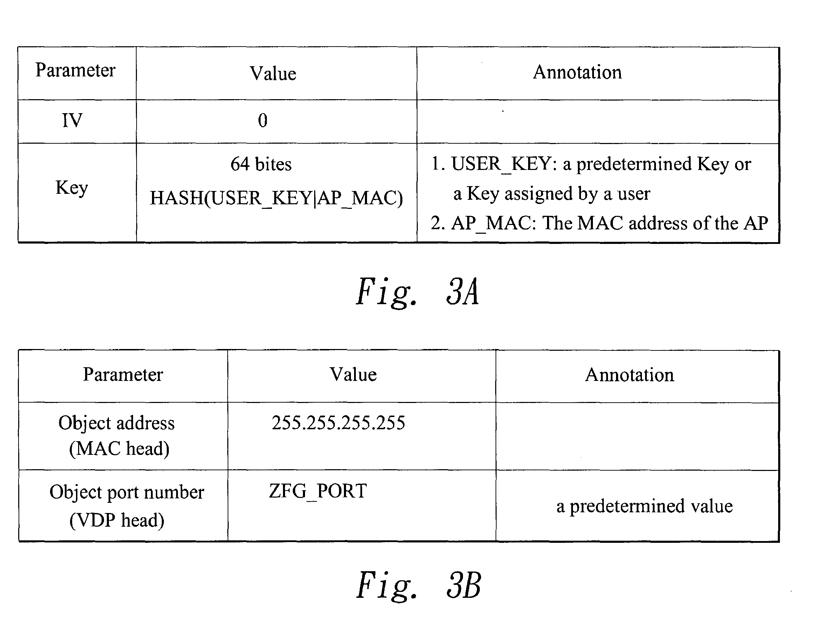

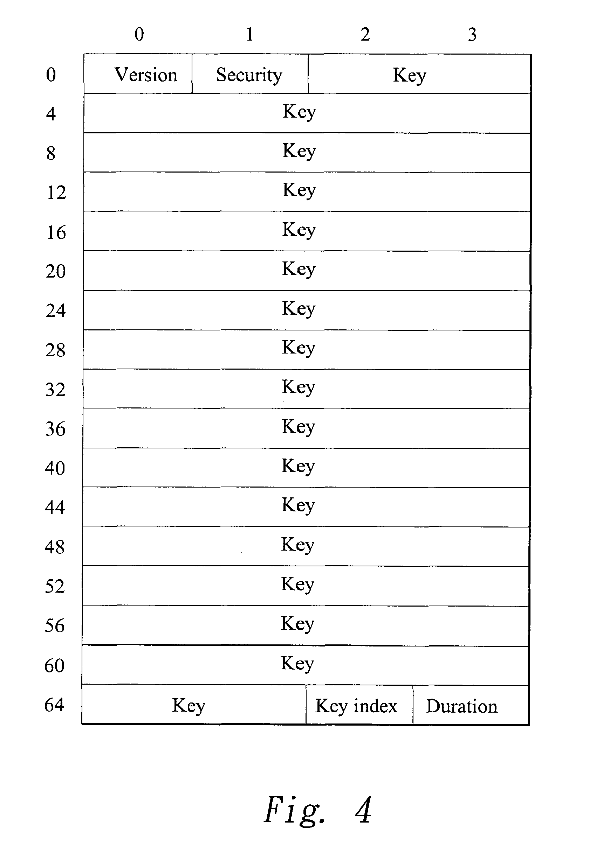

Please refer to **Fig. 3A, Fig. 3B** and **Fig. 4,** which illustrates various types of data in connecting **step 104.** As shown in **Fig. 3A,** in connecting **step 104,** the date is encrypted by DES, and encryption-related parameters comprise IV with a value 0 and a 64-bit Key. Wherein the value of the 64-bit Key is generated by hashing an USER_KEY parameter and an AP_MAC. Also, the USER_KEY parameter represents a predetermined Key or a Key designated by a user, and AP_MAC represents the MAC address of AP. As shown in **Fig. 3B,** the UDP package comprises an object address with a value 255.255.255.255 (that is, the MAC head) and an object address number (that is, the UDP head) of ZFG_PORT with a predetermined value.

**Fig. 4** has shown one type of the UDP packages. As shown in **Fig. 4,** version data occupies a byte and has a value 1 in this embodiment. The Key occupies 64 pits, which explains the Key's value, which is utilized in particular safety mode. Key index occupies a byte, which explains an initialize TX key used in WEP-64 and WEP-128. When a mode indicated by safety area is other than WEP-64 or WEP-128, the ST will no longer need to concern the concept of this section. Also, duration data occupies a bite and represents the time the AP keeps in connection state (second). For example, if the duration is 60 seconds, then the AP will return to normal operation after 60 seconds.

Besides, security data occupies a byte. The allowable value of the security data and the meaning it indicates are described as follows:
0: none
1: 64-bite WEP
2: 128-bite WEP
3: WPA-PSA
4: others

The activation of above-mentioned security setting steps can be selected from: AP hardware activation, AP software activation, AP intelligent activation, ST manual activation or ST auto activation. The various activation will be described more detailly in the below.

AC hardware activation means providing a control device such as a button or a switch on the AC, and activates security mechanism setting step by pushing down the control device. By this method, a pre-stored USER_KEY will be utilized, which is used in above-mentioned connecting **step 3.** Moreover, AP software activation is an activating method such as using an UI. By this method, the user can provide USER_KEY, which can be stored for use.

If the user doesn't provide a new USER_KEY, then use a pre-stored USER_KEY, which is used in above-mentioned connecting **step 3.** Besides, AP intelligent activation means that a list of usable STs will be kept in the AP. If one of these STs is refused by the APs according to wrong security mechanism settings, the APs will activate security mechanism setting steps automatically.

ST manual activation means that the user uses UI to activate security mechanism setting steps manually. As described above, if the user doesn't provide a new USER_KEY, then use a pre-stored USER_KEY, which is used in above-mentioned connecting **step 3.**

ST auto activation means that when WLAN connection is broken off in PROTECT_TIME, the security mechanism setting steps will be activated automatically. The STs will scan wireless channels in SCAN_TIME and search if there are APs with original SSID or APs that are executing security mechanism setting steps. If the STs don't find proper APs, then the STs will restart to scan in each of SCAN_INTERVAL_TIME .

It should be noted that not only the activating method described above can activate the present invention but also other methods known by persons skilled in the art can activate the present invention. Even more, the activating step can be omitted. For example, after the activation of APs and STs, the system executes security mechanism setting steps after the normal step, thus no activating steps will be necessary. Also, the various data types of each parameter are not necessary to be the same with that shown in **Fig. 2** and **Fig. 4.** Any known types of parameters and data, which can finish the connection between APs and STs, are included in the present invention.

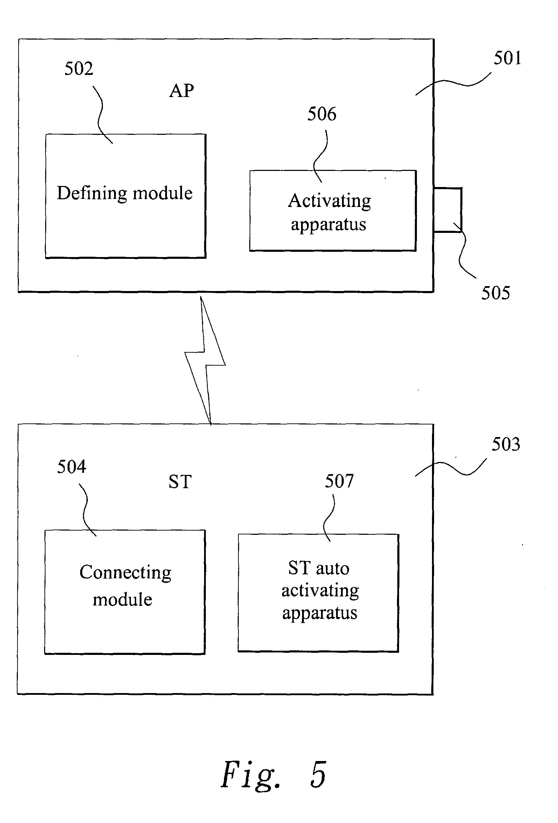

Another embodiment is also disclosed according to the present invention. As shown in **Fig. 5,** it is an apparatus for auto setting the security mechanism. This apparatus comprises an AP **501,** which includes a defining module **502** and a ST **503,** which comprises a connecting module **504.** The connection between AP **501** and ST **503** is established by WLAN.

Wherein, AP **501** and ST **503** execute a normal step to establish the communication negotiation between AP **501** and ST **503.** Then AP **501** and ST **503** execute a security setting step, which means the following steps: defining a plurality by using defining module **502,** next the connecting module **504** connecting to AP **501** that broadcasts the UDP packages periodically according to these parameters, and setting WLAN security settings. Relative parameters and data type have already been mentioned above, thus they will not be described again.

As described above, the present invention can be designed to that AP **501** and ST **503** directly execute the security setting step after completing the normal step, or AP **501** and ST **503** stop executing the normal step and execute security setting step. Also, the activating apparatus can be an AP hardware activating apparatus (ex switch **505),** an AP software activating apparatus (ex UI, not shown), an AP intelligent activating apparatus (ex activating apparatus 506), a ST manual activating apparatus (ex UI, not shown) and a ST auto activating apparatus **507.** The operation of these activating apparatus have already been mentioned above, thus they will not be described again. Besides, it should be noted that the positions of the activating apparatus are not necessary at the positions shown in **Fig. 5,** and activating apparatus can e different types, such as outside-connection apparatus.

Using the above-mentioned method and apparatus according to the present invention can make users set security mechanism easily. Moreover, the present invention further comprises below advantages: simplifying the security mechanism setting steps on the ST, making transmission of the security mechanism settings of connected STs easier, and increasing the security level of the APs' pre-determined value. According to above-mentioned embodiments, the method and apparatus for auto setting security mechanism of WLAN according to the present invention is a really new invention with many advantages.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. A method for auto setting WLAN security mechanism, which comprises:
a normal step, which executes communicating negotiation between an access point (AP) (501) and a station (ST) (503);
a security setting step, which includes:
a defining step, in which said AP (501) defines a plurality of parameters;
a connecting step, which enables said ST (503) to connect to said AP (501), which is enabled to broadcast the User Datagram Protocol (UDP) packages periodically, and sets up the WLAN security settings.

2. The method according to claim 1, where in said AP (501) and ST (503) execute said normal step again after said security setting step.

3. The method according to claim 1, wherein an activating step is further included, which is used to stop said normal step and activate said security setting step.

4. The method according to claim 1, wherein said activating step is at least one selected from a group of AP (501) hardware activation, AP (501) software activation, AP (501) intelligent activation, ST (503) manual activation and ST (503) auto activation.

5. The method according to claim 1, wherein said parameters comprise: a Service Set Identifier (SSID) parameter, a recognition parameter, and a Wired Equivalent Privacy (WEP) parameter.

6. The method according to claim 5, wherein said SSID parameter comprises ORI_SSID and_ZERO_CFG.

7. The method according to claim 7, wherein a value of said recognition parameter is Shared Secret.

8. The method according to claim 5, wherein a size of said WEP parameter is 64 bits, the final 5 bytes of said WEP parameter are AP MAC address, and said 5 bytes are used as Key.

9. The method according to claim 5, in said connecting step, the data is DES encrypted by using IV with value 0 and Key of 64 bits, and the value of said Key of 64 bits is generated by hashing a USER_KEY parameter and an AP_MAC.

10. The method according to claim 1, wherein said UDP packages comprise a MAC head of value 255.255.255.255 and an UDP head of ZFG_PORT with a predetermined value.

11. The method according to claim 1, wherein the data of said UDP packages comprises inversion, Key, Key index and continuing period.

12. An apparatus for auto setting WLAN security mechanism, which comprises:
an access point (AP) (501), having a defining module (502);
a station (ST) (503), having a connecting module (504);
wherein said AP (501) and ST (503) execute a normal step to establish communicating negotiation between said AP (501) and ST (503); then said AP (501) and ST (503) execute a security setting step, in which said defining module (502) defines a plurality of parameters; and next said connecting module (504) connects to said AP (501) according to said parameters and sets up the WLAN security settings; after that said AP (501) broadcasts the User Datagram Protocol (UDP) packages periodically.

13. The apparatus according to claim 12, where in said AP (501) and ST (503) execute said normal step again after said security setting step.

14. The apparatus according to claim 12, wherein an activating apparatus (506) is further included, which is used to stop said normal step and activate said security setting step.

15. The apparatus according to claim 14, wherein said activating apparatus (506) is at least one selected from a group of AP (501) hardware activating apparatus, AP (501) software activating apparatus, AP (501) intelligent activating apparatus ST (503) manual activating apparatus and ST auto activating apparatus (507).

16. The apparatus according to claim 12, wherein said parameters comprise: a Service Set Identifier (SSID) parameter, a recognition parameter, and a Wired Equivalent Privacy (WEP) parameter.

17. The apparatus according to claim 16, wherein said SSID parameter comprises ORI_SSID and ZERO_CFG

18. The apparatus according to claim 16, wherein a value of said recognition parameter is Shared Secret.

19. The apparatus according to claim 16, wherein a size of said WEP parameter is 64 bits, the final 5 bytes of said WEP parameter are AP MAC address, and said final 5 bytes of the WEP parameter are used as Key.

20. The apparatus according to claim 12, wherein in said connecting step, data is DES encrypted by using IV with value 0 and Key of 64 bits, and the value of said Key of 64 bits is generated by hashing a USER_KEY parameter and an AP_MAC.

21. The apparatus according to claim 12, wherein said UDP packages comprise a MAC head of value 255.255.255.255 and an UDP head of ZFG_PORT with a predetermined value.

22. The apparatus according to claim 12, wherein the data of said UDP packages comprises inversion, Key, Key index and continuing period.
